# EUROPÄISCHE PATENTSCHRIFT

(11) **EP 3 061 977 B1**
(45) Veröffentlichungstag und Bekanntmachung des Hinweises auf die Patenterteilung: **18.04.2018**
(21) Anmeldenummer: 16154362.4
(22) Anmeldetag: 05.02.2016
(51) Int. Cl.: F16B 5/12, B60R 13/02, F16B 2/24

(54) **KLEMME**
CLAMP
PINCE

(30) Priorität: 27.02.2015 DE 102015102825
(43) Veröffentlichungstag der Anmeldung: 31.08.2016
(73) Patentinhaber: Lisa Dräxlmaier GmbH, 84137 Vilsbiburg (DE)
(72) Erfinder: Halbedl, Klaus, 80995 München (DE); Halfpap, Thorsten, 85748 Garching (DE)

(56) Entgegenhaltungen:
- EP-A2- 2 103 821
- GB-A- 2 201 723
- GB-A- 2 495 432
- US-A1- 2008 229 550

## Beschreibung

Die Erfindung betrifft eine Klemme, insbesondere Kantenklemme, aufweisend ein Verbindungsteil mit einem Befestigungsbereich zum Befestigen mindestens eines Bauteils und mit einem Aufnahmebereich zur Aufnahme einer Federklammer und aufweisend eine in den Aufnahmebereich einsetzbare Federklammer, die in einem verbauten Zustand unlösbar auf einen Vorsprung, insbesondere auf eine Rippe, aufsteckbar ist. Die Erfindung betrifft auch ein Verfahren zum Montieren und Demontieren einer Klemme, insbesondere Kantenklemme. Die Erfindung ist beispielsweise anwendbar auf Kraftfahrzeuge, insbesondere zur Befestigung von Kabelbäumen und Schläuchen.

Eine Kantenklemme (die auch als "Kantenklip" oder "Edge Clip" bezeichnet werden kann) dient zur Befestigung beliebiger Teile z.B. eines Fahrzeugs an einen Trägerkörper. Der Trägerkörper weist an einer Stelle eine Rippe (z.B. auch als Kante, Steg oder Lasche bezeichnet oder ausgebildet) auf, auf welche die Kantenklemme aufgeschoben oder aufgesteckt wird. Die Rippe weist im Kraftfahrzeugbau eine typische Breite oder Stärke von ca. 2 mm auf. Eine in der Kantenklemme integrierte Federkralle aus Metall wiederhakt sich in der Lasche mit Krallen. Beispielsweise kann die Kantenklemme mit einem inwendigen Blecheinlegeteil versehen sein, das sich in die dafür vorgesehene Kante des Trägerkörpers verkrallt. Der Trägerkörper besteht aus Kunststoff. Eine Demontage von dem Trägerkörper der Kantenklemmen kann nur unter Zuhilfenahme eines Werkzeuges, unter einem erhöhten Zeit- und Kraftaufwand sowie unter Beschädigung oder sogar Zerstörung der Kantenklemme erfolgen, weil sich die Federkralle tief in die Rippe eingeschnitten hat. Ein hoher Zeiteinsatz und hoher Aufwand in Service, Baugruppenphasen, sowie Kosten sind daher bei der Demontage nötig.
Ein weiterer bekannter Lösungsansatz besteht darin, die Rippe mit Löchern oder Hinterschneidungen zu versehen, damit ein Haken einer krallenlosen Kantenklemme damit verrasten kann. Dies bedingt aber eine teurere Herstellung von Kantenklemme und Trägerkörper, weil die Löcher und/oder Hinterschneidungen nur schwer oder oft auch gar nicht herzustellen sind.
Zudem sind aus US 2006/0168773 A1 und US 2006/0254032 A1 Klemmen bekannt, die in Öffnungen eingebracht werden können und in dieser Öffnung weitere Bauteile, z.B. in Zylinderform oder Rippenform, befestigen.

Eine gattungsgemässe Klemme ist beispielsweise aus der EP 2 103 821 A2 bekannt.

Es ist die Aufgabe der vorliegenden Erfindung, die Nachteile des Standes der Technik zumindest teilweise zu überwinden und insbesondere eine verbesserte Befestigung, insbesondere Demontage, einer Klemme, insbesondere Kantenklemme, unter Beibehaltung einer ausreichenden Haltekraft an dem Trägerkörper bereitzustellen.
Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Klemme, aufweisend (a) ein erstes Teil (im Folgenden ohne Beschränkung der Allgemeinheit als "Verbindungsteil" bezeichnet) mit einem ersten Bereich (im Folgenden ohne Beschränkung der Allgemeinheit als "Befestigungsbereich" bezeichnet) zum Befestigen mindestens eines Bauteils und mit einem zweiten Bereich (im Folgenden ohne Beschränkung der Allgemeinheit als "Aufnahmebereich" bezeichnet) zur Aufnahme einer Federklammer und aufweisend (b) eine in den Aufnahmebereich haltend einsetzbare Federklammer, die unlösbar auf einen Vorsprung, insbesondere eine Rippe, aufsteckbar ist, wobei die Federklammer lösbar in den Aufnahmebereich einsetzbar ist.

Diese Klemme weist den Vorteil auf, dass sie einfach auf den Vorsprung aufsteckbar ist, da sie keine Löcher oder Hinterschneidungen benötigt, aber das Verbindungsteil wieder von dem Trägerkörper lösbar ist. Die Federklammer verbleibt nach Abzug des Verbindungsteils hingegen an dem Trägerkörper. Dies gibt den weiteren Vorteil, dass nach Abzug des Verbindungsteils dieses Verbindungsteil oder ein anderes Verbindungsteil mit freiem Aufnahmebereich wieder auf den immer noch mit der Federklammer versehenen Vorsprung aufsetzbar ist. Die Klemme ist auch auf einen glattflächigen Vorsprung ohne Hinterschneidungen oder andere Rastaussparungen aufsteckbar, und das Verbindungsteil ist zerstörungsfrei demontierbar und wieder aufsteckbar. Ferner kann ein Verbindungsteil mit freiem Aufnahmebereich auf einen anderen mit einer Federklammer versehenen Vorsprung aufgesetzt werden.

Der Aufnahmebereich kann mindestens einen Aufnahmeraum zur Aufnahme mindestens einer Federklammer aufweisen.

Das zu befestigende Bauteil mag z.B. ein Kabelsatz, ein Schlauch, ein Rohr usw. sein.

Das Verbindungsteil und die Federklammer stellen jeweils einen Teil von insgesamt mindestens zwei Teilen der Klemme dar.

Das Verbindungsteil mag zumindest teilweise, insbesondere ganz, aus Kunststoff bestehen, kann jedoch auch ein Verbundbauteil sein, z.B. aufweisend ein zumindest teilweise mit Kunststoff umspritztes Metallteil. Das Verbindungsteil kann alternativ aus Metall bestehen, z.B. als ein Metallgussteil vorliegen.

Der Befestigungsbereich und der Aufnahmebereich können in einem Stück hergestellt sein oder separat hergestellte und dann miteinander verbundene Teile sein.

Unter einer in den Aufnahmebereich "haltend einsetzbaren Federklammer" wird insbesondere verstanden, dass die Federklammer nach Einsatz in den Aufnahmebereich dort kraftschlüssig und/oder formschlüssig gehalten wird und also dort gehalten wird und nicht ohne Kraftaufwand wieder herausgleiten kann.

Dass die Federklammer unlösbar auf den Vorsprung aufsteckbar ist, umfasst insbesondere, dass die Federklammer nur unter einem merklich erhöhten Aufwand und insbesondere nur unter Beschädigung oder Zerstörung der Federklammer und/oder des Vorsprungs von dem Vorsprung lösbar ist. Die Unlösbarkeit umfasst insbesondere keine lösbare Rastverbindung.

Der Vorsprung kann auch als "Befestigungsvorsprung" bezeichnet werden. Der Vorsprung ist insbesondere glattflächig oder geschlossenflächig und weist also keine Hinterschneidungen oder andere Rastaussparungen auf.

Es ist eine Ausgestaltung, dass der Vorsprung eine Rippe (Kante, Lasche o.ä.) ist, wobei die Klemme dann ohne Beschränkung der Allgemeinheit auch als "Kantenklemme" bezeichnet werden kann. Die Rippe weist insbesondere eine plattenförmige Grundform mit einer Breite auf, die wesentlich geringer ist als eine ebene Ausdehnung der Rippe. Die Rippe ist insbesondere plan. Sie steht insbesondere senkrecht von einer Unterlage oder Basis des Trägerkörpers ab, was eine Befestigung der Klemme erleichtert. Jedoch kann die Federklammer auch so ausgestaltet sein, dass sie an anders geformten Vorsprüngen unlösbar befestigbar ist, beispielsweise an einem Stift oder Bolzen. Die Rippe ist insbesondere glattflächig oder geschlossenflächig.

Es ist zudem eine Ausgestaltung, dass eine Kraft (im Folgenden ohne Beschränkung der Allgemeinheit als "Einsatzkraft" bezeichnet) zum Einsetzen, insbesondere Einstecken, der Federklammer in den Aufnahmebereich geringer ist als eine Kraft (im Folgenden ohne Beschränkung der Allgemeinheit als "Abzugskraft" bezeichnet) zum Lösen der Federklammer aus dem Aufnahmebereich in einem verbauten Zustand. Dadurch ergibt sich der Vorteil, dass sich die Federklammer einfach und unter einem nur geringen Kraftaufwand in das Verbindungsteil einsetzen lässt, was z.B. eine schnelle und bequeme Verheiratung von Verbindungsteil und Federklemme auch ohne Werkzeug ermöglicht. In dem verbauten Zustand wird durch die vergleichsweise hohe Abzugskraft eine sichere Befestigung der Klemme an dem Trägerkörper ermöglicht.

Unter einem "verbauten Zustand" wird insbesondere derjenige Zustand verstanden, bei dem die Federklammer in den Aufnahmebereich eingesteckt oder eingesetzt worden ist und zudem auf den Vorsprung, insbesondere die Rippe o.ä., aufgesteckt worden ist. Die Klemme ist in dem verbauten Zustand an dem den Vorsprung aufweisenden Trägerkörper befestigt.

Unter einem "unverbauten Zustand" wird insbesondere derjenige Zustand verstanden, bei dem die Federklammer in den Aufnahmebereich eingesteckt oder eingesetzt worden ist, aber noch nicht auf den Vorsprung o.ä. aufgesteckt worden ist. In dem unverbauten Zustand kann die Klemme z.B. noch frei gehandhabt werden.

Der Unterschied in der Höhe von Einsatzkraft und Abzugskraft kann beispielsweise dadurch bewirkt sein, dass die Federklemme in Bezug auf ein Einsetzen in den Aufnahmebereich und auf ein Abziehen des Verbindungsteils unterschiedlich geformt ist.

Außerdem kann der in die Federklemme eingreifende Vorsprung eine Begrenzung einer Verformung der Federklemme bewirken, die dadurch steifer bzw. weniger nachgiebig gegenüber einem Ausgriff aus dem Aufnahmebereich wirkt.

Die Abzugskraft entspricht insbesondere mindestens einer maximal vorgegebenen Haltekraft zum Halten der Klemme an dem Trägerkörper. Die Abzugskraft ist genau und gut reproduzierbar einstellbar.

Es ist noch eine Ausgestaltung, dass die Federklammer einen bandförmigen Körper aufweist oder als ein solcher Körper ausgebildet ist, der einen schlitzförmigen Abschnitt (im Folgenden ohne Beschränkung der Allgemeinheit als "Befestigungsabschnitt" bezeichnet) zum Einstecken des Vorsprungs aufweist. Eine solche Federklammer ist besonders einfach herstellbar, z.B. durch Biegen und ggf. Stanzen. Der schlitzförmige Abschnitt mag einen u-förmigen Querschnitt aufweisen. Er mag eine Breite aufweisen, die zumindest ungefähr einer Breite des einzusteckenden Vorsprungs, insbesondere einer einzusteckenden Rippe, entspricht.

Es ist eine allgemeine Weiterbildung, dass die Federklammer aus Metall besteht, was sie besonders robust und einfach herstellbar macht. Das Metall mag Stahl, insbesondere Federstahl, sein. Es ist eine Ausgestaltung davon, dass die Federklammer ein Blechteil ist, z.B. ein Stanz/Biege-Teil.
Die Federklammer und/oder das Verbindungsteil können oberflächenvergütet sein.

Es ist eine Weiterbildung, dass die Federklammer bzw. der Körper beidseitig, insbesondere an den Befestigungsabschnitt anschließende, Verformungsabschnitte, die seitlich von dem schlitzförmigen Befestigungsabschnitt nach außen ausgebuchtet sind, aufweist. Dadurch lässt sich auf gestalterisch einfache Weise eine lösbare formschlüssige Unterbringung der Federklammer in dem Aufnahmebereich erreichen. Insbesondere kann das Einsetzen der Federklammer durch ein Zusammendrücken der Verformungsabschnitte erreicht werden, so dass die Federklammer so schlank wird, dass sie in den Aufnahmebereich bzw. in einen dortigen Aufnahmeraum passt. In dem Aufnahmebereich kann sich die Federklammer wieder entspannen und dadurch nach außen ausdehnen, so dass ein Formschluss in dem Aufnahmebereich erreicht wird. Jedoch kann grundsätzlich auch eine andere Art von lösbarer Befestigung der Federklammer in dem Aufnahmebereich vorgesehen sein.

Die Verformungsabschnitte können symmetrisch zu dem Befestigungsabschnitt ausgebildet sein.

Es ist noch eine Weiterbildung, dass die Verformungsabschnitte jeweils zwei gegenläufige Schrägen aufweisen und eine maximale Breite der Federklammer größer ist als ein Öffnungsmaß (z.B. eine Öffnungsbreite) des Aufnahmebereichs. Dadurch wird erreicht, dass die Federklammer an einer der Schrägen in den Aufnahmebereich hineingleiten kann und an der anderen Schräge aus dem Aufnahmebereich herausgleiten kann. Dies vereinfacht das Einsetzen und Lösen der Federklammer. Durch eine unterschiedliche Steigung der Schrägen kann ein Unterschied der Einsatzkraft im Vergleich zur Abzugskraft erreicht oder verstärkt werden.

Es ist eine weitere Ausgestaltung, dass die maximale Breite der Federklammer einem Abstand von maximal von dem schlitzförmigen Befestigungsabschnitt entfernten Punkten der beiden Verformungsabschnitte entspricht, insbesondere einem in Bezug auf eine Einsetzrichtung senkrechten Abstand. Dies vereinfacht eine genaue Einstellung der Abzugskraft, die beispielsweise durch einen Ausgriff der maximal entfernten Punkte aus dem Aufnahmebereich definiert sein kann. Insbesondere kann durch den Abstand eine maximal nötige Verformung der Federklammer zum Ausgriff aus dem Aufnahmebereich festgelegt sein.

Es ist eine Weiterbildung, dass die Federklammer eine im Querschnitt umlaufend geschlossene Form aufweist, was eine besonders gut definierte Einstellung einer auch hohen Federkraft ermöglicht. Beispielsweise kann ein Blechband oder Blechstreifen an seinen freien Enden, die eine Stoßkante bilden, verbunden sein, beispielsweise dort verschweißt sein. Es ist eine alternative Weiterbildung, dass die Federklammer bzw. der Körper an ihren freien Enden eine unverbundene oder offene Stoßkante bildet, was besonders einfach umsetzbar ist.

Es ist noch eine weitere Ausgestaltung, dass die Federklammer eine Federkralle ist. Dadurch kann die Federklammer auf besonders einfache Weise an dem Vorsprung bzw. an dem zugehörigen Trägerkörper unlösbar befestigt werden. Als Federkralle weist die Federklammer eine oder mehrere Krallenbereiche oder Krallen (z.B. Widerhaken) auf, die einen Eingriff des Vorsprungs erlauben, aber deren Ausgriff verhindern. Zum Verhindern des Ausgriffs mag sich die mindestens eine Kralle beispielsweise in den Vorsprung eingraben und so einen Formschluss gegen den Ausgriff erzeugen. Die Kralle kann z.B. spitz sein.

Es ist eine Weiterbildung, dass die als Federkralle ausgebildete Federklemme einen schlitzförmigen Befestigungsabschnitt aufweist, in den der Vorsprung hineingleiten oder eingesteckt werden kann, und der schlitzförmige Befestigungsabschnitt mindestens eine nach Innen (in den von dem Vorsprung einzunehmenden Bereich) ragende Lasche aufweist. Die Lasche lässt sich durch den in den Befestigungsabschnitt hineingleitenden Vorsprung verdrängen und drückt dann mit einem freien Rand gegen den Vorsprung. Beim Versuch, den Vorsprung aus dem schlitzförmigen Befestigungsabschnitt herauszuziehen bzw. die Klemme abzuziehen, gräbt sich der freie Rand in den Vorsprung ein.

Es ist eine für eine besonders sichere Befestigung der Federkralle an dem Vorsprung bzw. an dem zugehörigen Trägerkörper vorteilhafte Weiterbildung, dass der Vorsprung (und damit vorteilhafterweise auch der ganze Trägerkörper) aus Kunststoff besteht. Der Kunststoff zumindest des Vorsprungs kann aus Polyamid 66 ("PA 66") mit einem Glasfaseranteil von 50% oder weniger bestehen.

Jedoch kann der Vorsprung bzw. der zugehörige Trägerkörper auch aus Metall bestehen, z.B. aus Gussmetall. Es ist eine zum sicheren formschlüssigen Eingriff des mindestens einen Widerhakens oder Kralle in dem Vorsprung vorteilhafte Weiterbildung, dass das Material des Vorsprungs weicher ist als das Material der mindestens einen Kralle.

Der Vorsprung kann für einen verbesserten Formschluss mit der mindestens einen Kralle Vertiefungen aufweisen, in welche die mindestens eine Kralle eingreifen kann, z.B. Rillen oder Gräben.

Es ist ferner eine Ausgestaltung, dass der Befestigungsbereich als eine Kabelbaumhalterung ausgebildet ist. Dadurch ist die Klemme besonders vorteilhaft zur Verlegung von Kabeln verwendbar, z.B. in einem Motorraum eines Kraftfahrzeugs. Mit der Kabelbaumhalterung können insbesondere Kabelbäume oder Kabelsätze fixiert werden, ggf. auch Rohre, Schläuche usw. Durch die einfache Montage und Demontage der Klemme ist auch ein Einsatz an Elektrik-Haltern und Schächten problemlos möglich. Der als Kabelbaumhalterung dienende Befestigungsbereich kann beispielsweise in Form eines Unterteils eines Kabelbaum-Schachts ausgebildet sein.

Es ist auch eine Ausgestaltung, dass der Befestigungsbereich als eine Schlauchhalterung ausgebildet ist, beispielsweise auch für Wellschläuche.

Es ist außerdem eine Ausgestaltung, dass der Befestigungsbereich als eine Rohrhalterung ausgebildet ist, beispielsweise auch für Wellrohre. Der Befestigungsbereich kann dann beispielsweise in Form eines Wellrohr-Clips, für geschlitzte Wellrohre auch halb geöffnet, ausgebildet sein.

Es ist eine Weiterbildung, dass der Befestigungsbereich als eine Halterung für ein Verkleidungsteil ausgebildet ist, z.B. für eine Innenverkleidung eines Kraftwagens oder Flugzeugs.

Die Aufgabe wird ferner gelöst durch ein Kraftfahrzeug, das mindestens eine Klemme wie oben aufweist, insbesondere eine an einem mit einem Vorsprung, insbesondere einer Rippe, ausgestatteten Trägerkörper aufgesetzte Klemme. Das Fahrzeug kann analog zu der Klemme wie oben beschrieben ausgebildet sein und ergibt die gleichen Vorteile.

Das Kraftfahrzeug kann beispielsweise ein Kraftwagen (z.B. ein Pkw, ein Lkw, ein anderes Nutzfahrzeug usw.), ein Motorrad, ein Wasserfahrzeug wie ein Schiff, ein Luftfahrzeug wie ein Flugzeug, ein Hubschrauber usw. sein.

Die Aufgabe wird auch gelöst durch ein Verfahren zum Montieren einer Klemme, insbesondere Kantenklemme, insbesondere wie oben beschrieben, an einen mit einem Vorsprung, insbesondere einer vorstehenden Rippe (Kante, Lasche usw.), ausgestatteten Trägerkörper, bei dem eine Federklammer unter Aufbringung einer Einsatzkraft zum elastischen Verformen der Federklammer formschlüssig in den Aufnahmebereich des Verbindungsteils der Klemme eingesteckt wird und die Klemme mit der in den Aufnahmebereich bzw. dessen Aufnahmeraum eingesteckten Federklammer auf den Vorsprung aufgesteckt wird.

Die Aufgabe wird auch gelöst durch ein Verfahren zum Demontieren einer Klemme insbesondere wie oben beschrieben, bei dem zum Abziehen des Verbindungsteils mit einer solchen Abzugskraft an ihm gezogen wird, dass das Verbindungsteil unter elastischer Verformung der Federklammer von der an dem Vorsprung verbleibenden Federklammer abgezogen wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
Fig.1 zeigt in Schrägansicht einen Ausschnitt aus einer mit einem Trägerkörper verbundenen Klemme gemäß einem ersten Ausführungsbeispiel, die an einem Trägerkörper befestigt ist;
Fig.2 zeigt in einer Ansicht von unten ausschnittsweise ein Verbindungsteil der Klemme aus Fig.1;
Fig.3 zeigt in einer Schrägansicht einen Ausschnitt aus dem Trägerkörper aus Fig.1;
Fig.4 zeigt in einer Schrägansicht eine Federklammer der Klemme aus Fig.1;
Fig.5 zeigt als Explosionsdarstellung in Schrägansicht das Verbindungsteil mit der Federklammer der Klemme aus Fig.1;
Fig.6 zeigt die Klemme aus Fig.1 in einer Schrägansicht;
Fig.7 zeigt in Schrägansicht die Klemme vor Aufstecken auf den Trägerkörper aus Fig.1;
Fig.8 zeigt in Schrägansicht die nun auf den Trägerkörper aufgesteckte Klemme aus Fig.7;
Fig.9 zeigt in Schrägansicht das von dem Trägerkörper abgezogene Verbindungsteil der Klemme aus Fig.7;
Fig.10 zeigt in Querschnittsansicht die auf den Trägerkörper aufgesteckte Klemme aus Fig.8; und
Fig.11 zeigt in Schrägansicht eine Klemme gemäß einem zweiten Ausführungsbeispiel.

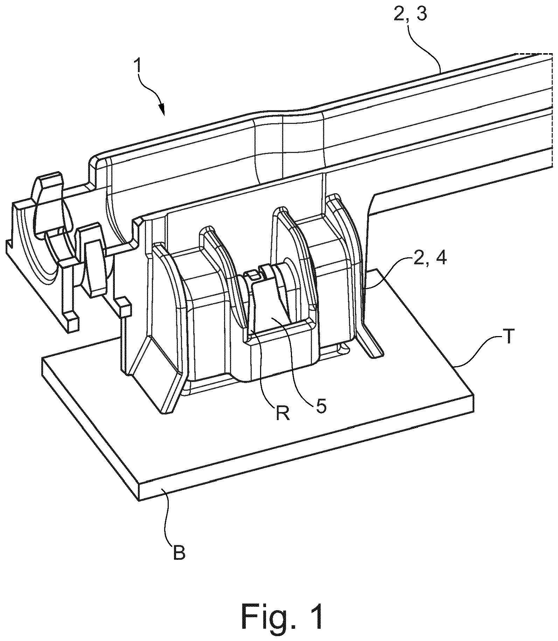

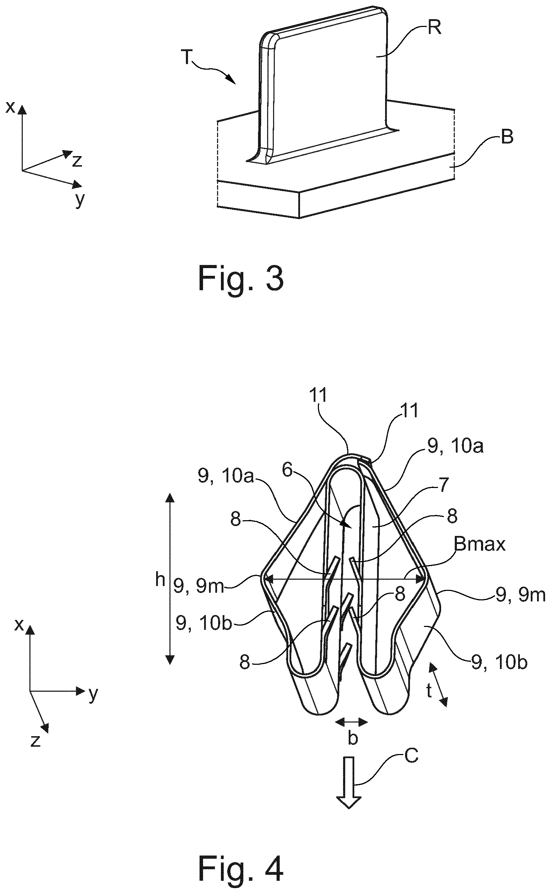

Fig.1 zeigt in Schrägansicht einen Ausschnitt aus einer mit einem Trägerkörper T verbundenen Klemme 1. Der Trägerkörper T weist hier eine ebene Basis B und eine davon senkrecht vorstehende, plattenförmige Rippe R auf. Die Klemme 1 ist auch als eine Kantenklemme nutzbar. Der Trägerkörper T ist in Alleinstellung in Fig.3 dargestellt.

Die Klemme 1 weist ein Verbindungsteil 2 mit einem Befestigungsbereich 3 zum Befestigen eines Kabelstrangs oder Kabelbaums (o. Abb.) und mit einem Aufnahmebereich 4 zur Aufnahme einer hier als eine Federkralle 5 ausgebildeten Federklammer auf. Das Verbindungsteil 2 kann als ein einstückiger Kunststoff- oder Metallguss-Körper vorliegen.

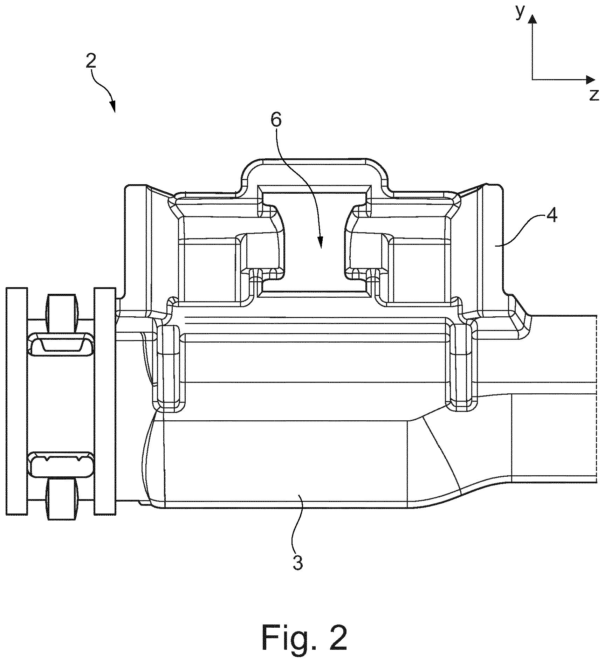

Der Befestigungsbereich 3 ist als ein Unterteil eines Kabelschachts ausgebildet, auf den ein passendes Oberteil (o. Abb.) aufgesetzt, beispielsweise aufgerastet, werden kann. Das Verbindungsteil 2 ist in Alleinstellung in Fig.2 in einer Ansicht von unten dargestellt.

Die Federkralle 5 ist in dem Aufnahmebereich 4 lösbar haltend eingesetzt und ist selbst in dem gezeigten verbauten Zustand unlösbar auf die Rippe R aufgesteckt. Das Verbindungsteil 2 liegt dabei auf der Basis B auf.

Fig.4 zeigt die Federkralle 5 in Alleinansicht. Die Federkralle 5 ist als ein bandförmiger, metallischer Blechkörper ausgebildet. Sie weist einen schlitzförmigen Befestigungsabschnitt 7 auf, der eine schmale U-Form aufweist. Der Befestigungsabschnitt 7 weist eine konstante Breite b (entlang einer y-Achse y) auf und mag eine konstante oder eine sich ändernde Tiefe t (entlang einer z-Achse z) aufweisen.

Die in die Aufnahme 6 eingesetzte Federkralle 5 ist in einer Aufsteckrichtung C auf die Rippe R aufgesteckbar, welche dann entlang einer Höhe h in den Befestigungsabschnitt 7 eingreift. Die Rippe R mag nur teilweise oder bis zu einem Ende des Befestigungsabschnitts 7 eingeführt werden oder sein.

Der Befestigungsabschnitt 7 weist an seinem Längsrand mehrere laschenartige, spitz zulaufende Krallen 8 auf, die in den von der Rippe R auffüllbaren Aufnahmeraum 6 ragen, und zwar schräg gegen die Aufsteckrichtung C. Wird die Federkralle 5 auf die Rippe R aufgesteckt, gleitet der Befestigungsabschnitt 7 in Aufsteckrichtung C auf die Rippe R, so dass die Rippe 7 gegen die Aufsteckrichtung C in den Aufnahmeraum 6 hineingesteckt wird und dabei die elastisch rückfedernden Krallen 8 verdrängt. Die Krallen 8 drücken dann auf die Rippe R. Soll die Rippe R wieder entfernt werden, graben sich die Krallen 8 unter Spreizung in die Rippe R und blockieren deren Ausgriffsbewegung.

Beidseitig an den Befestigungsabschnitt 7 schließen sich Verformungsabschnitte 9 an, die seitlich von dem Befestigungsabschnitt 7 in y-Richtung y nach außen ausgebuchtet sind. Die Verformungsabschnitte 9 weisen jeweils zwei gegenläufige Schrägen 10a und 10b auf. Eine maximale Breite Bmax der Federkralle 5 entspricht einem Abstand in y-Richtung von maximal von dem schlitzförmigen Befestigungsabschnitt 7 entfernten Punkten 9m der beiden Verformungsabschnitte 9. Ineinander eingreifende freie Enden 11 der beiden Verformungsabschnitte bilden eine spaltbehaftete Stoßkante.

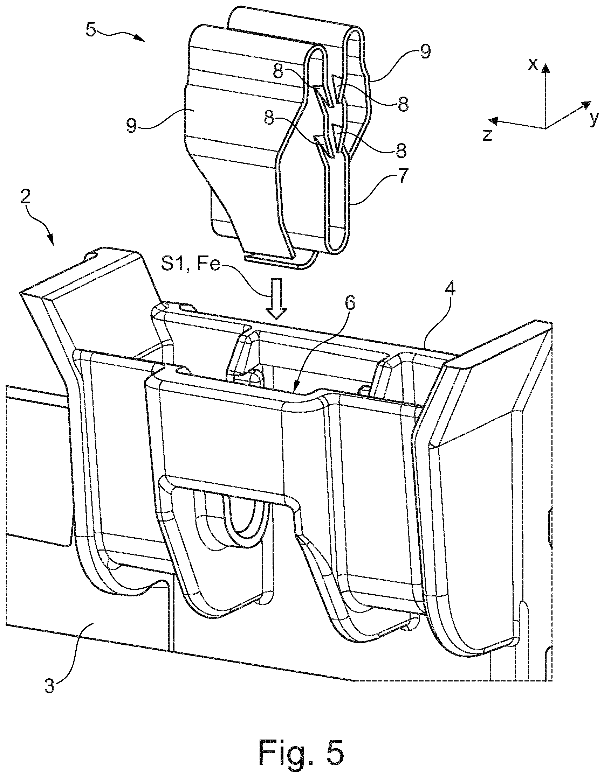

In den folgenden Fig. 5 bis 8 wird ein Befestigungs- oder Montagevorgang zum Montieren einer Klemme 1 an dem Trägerkörper genauer beschrieben.

Fig.5 zeigt in einer Ansicht von schräg unten das Verbindungsteil 2 mit in dessen Aufnahmeraum 6 in Pfeilrichtung einzusetzender Federkralle 5. Das Einsetzen kann ohne Werkzeug geschehen, da die zum Einsetzen der Federkralle 5 notwendige Einsatzkraft Fe in dem unverbauten Zustand vergleichsweise gering ist. Das Einsetzen kann bei einem Hersteller oder am Einsatzort geschehen.

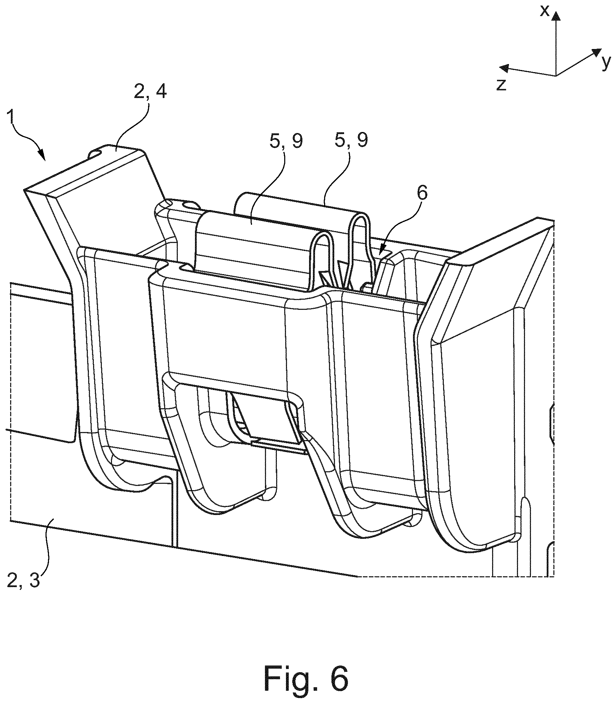

Fig.6 zeigt in einer zu Fig.5 gleichen Ansicht die aus der Federkralle 5 und dem Verbindungsteil 2 zusammengesetzte Klemme 1.

Der in den Fig.5 gezeigte und in Fig.6 abgeschlossene Ablauf kann insbesondere einem ersten Montageschritt S1 entsprechen.

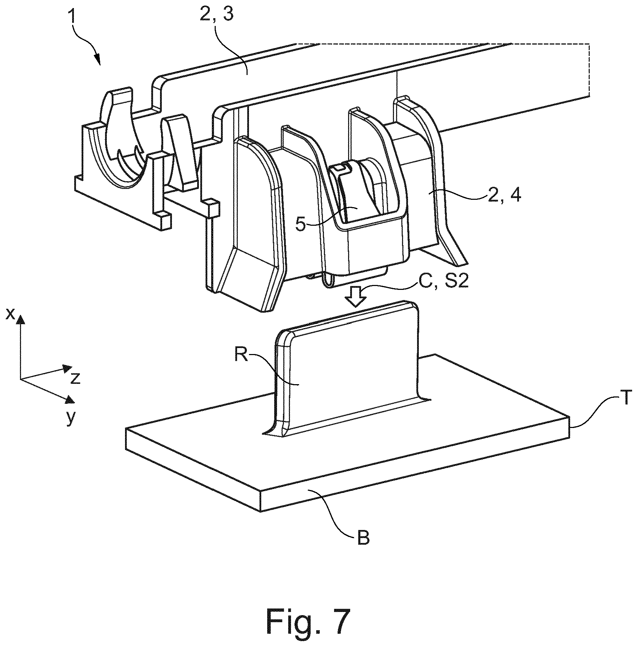

Fig.7 zeigt einer Ansicht von schräg oben die Klemme 1 vor Aufstecken auf den Trägerkörper T bzw. auf dessen Rippe R in Aufsteckrichtung C.

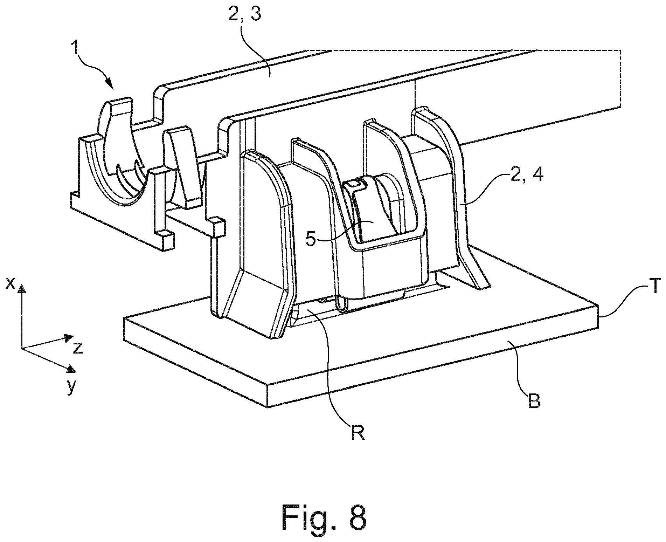

Fig.8 zeigt einer zu Fig.7 analogen Ansicht die nun auf den Trägerkörper T aufgesteckte Klemme 1 aus Fig.7 oder Fig.1. Die entspricht dem verbauten Zustand der Klemme 1.

Der in den Fig.7 gezeigte und in Fig.8 abgeschlossene Ablauf kann insbesondere einem zweiten Montageschritt S2 entsprechen, der dem Montageschritt S1 folgt.

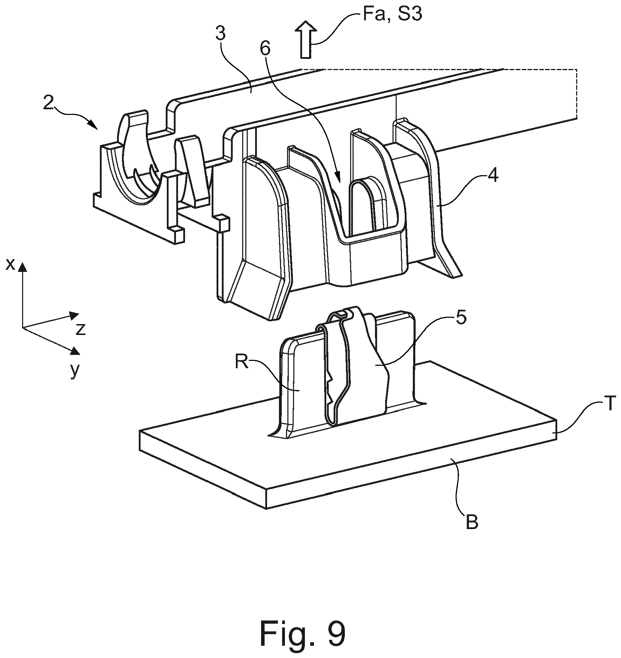

Fig.9 zeigt einer zu Fig.7 analogen Ansicht das nun nach Aufbringung einer Abzugskraft Fa von dem stationären Trägerkörper T abgezogene Verbindungsteil 2 der Klemme 1. Dies entspricht beispielsweise einem sogenannten "Service-Fall" oder den Fall der "leichten Demontage" der Klemme 1. Die Abzugskraft Fa lässt sich gut einstellen und ist insbesondere mindestens so hoch wie eine für den Einsatzzweck gewünschte oder vorgeschriebene Haltekraft. Die Abzugskraft Fa ist insbesondere wesentlich höher als die Einsatzkraft Fe. Die Klammer 5 verbleibt am Trägerköper T. Sie kann entweder von dem Trägerköper T mechanisch entfernt werden oder verbleibt am Trägerkörper. Dieses Verbildungsteil 2 oder ein anderes Verbindungsteil mit einer freien Aufnahme 6 kann nun so oft wie nötig wieder an der Federkralle 5 desselben Trägerkörpers T unter Einbehaltung der definierten Einsatzkraft Fe montiert bzw. unter Aufbringung der Abzugskraft Fa demontiert werden. Es treten keine Ermüdungserscheinungen oder Beschädigungen an dem Verbindungsteil 2, an der Klammer 5 oder an dem Trägerkörper T auf.

Der in Fig.9 gezeigte Ablauf kann insbesondere einem dritten Schritt S3 entsprechen.

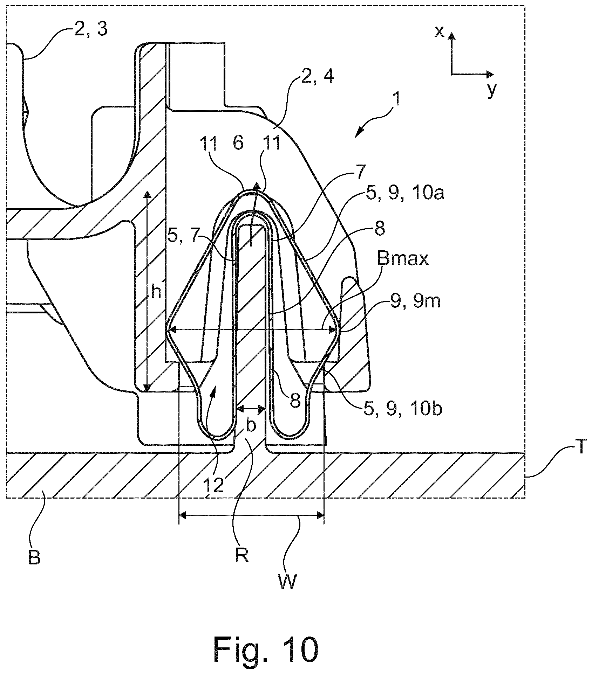

Fig.10 zeigt in Querschnittsansicht (d.h., in einer x-y-Ebene) die auf den Trägerkörper T aufgesteckte Klemme 1, die sich also im verbauten Zustand analog zu Fig.1 oder Fig.8 befindet. Der gezeigte Schnitt geht mitten durch die Federkralle 5. Die Aufnahme 6 weist eine Öffnung 12 zum Einführen oder Einstecken der Federkralle 5 auf, die eine Öffnungsbreite W (in y-Richtung) aufweist. Die Öffnungsbreite W ist geringer als eine Breite der Aufnahme 6, so dass die Aufnahme 6 einen Hinterschnitt bildet.

Die maximale Breite Bmax der Federkralle 5 ist größer als die Öffnungsbreite W, so dass die Einsatzkraft Fe aufgewandt werden muss, um die Federkralle 5 zusammenzudrücken und in die Aufnahme einzusetzen oder einzustecken. Dies kann durch eine einfache Einsteckbewegung geschehen, da die Federkralle 5 aufgrund der Schrägen 10a bereits durch das Einsetzen elastisch zusammengedrückt wird. Die Ränder der Öffnung 12 gleiten dazu auf den Schrägen 10a, so dass die Federkralle 5 mit steigender Eindringung der Federkralle 5 immer stärker elastisch zusammengedrückt wird, bis die "Scheitel-"Punkte 9m der beiden Verformungsabschnitte 9 erreicht sind. An diesem Eindringzustand entspricht die maximale Breite Bmax der Federkralle 5 der Öffnungsbreite W. Danach dehnt sich die Federkralle 5 wieder aus. In dem nun erreichten verbauten Zustand ist die Federkralle 5 zumindest teilweise formschlüssig in der Aufnahme 6 aufgenommen, und zwar insbesondere mit den Schrägen 10a und 10b der Verformungsabschnitte 9 und mit einem Teil des schlitzförmigen Befestigungsabschnitts 7. In dem verbauten Zustand ist die maximale Breite Bmax der Federkralle 5 also wieder größer als die Öffnungsbreite W, so dass dadurch der Formschluss hergestellt wird und die Federkralle 5 nicht ohne Aufwendung einer Abzugskraft Fa aus der Ausnahme entfernt werden kann.

Zum Ausgriff der Federkralle 5 aus der Aufnahme 6 kann die Abzugskraft Fa aufgewandt werden, beispielsweise durch Abziehen des Verbindungsteils 2. Dabei gleiten die Ränder der Öffnung 12 auf den Schrägen 10b der Federkralle 5 unter Kompression der Verformungsabschnitte 9 und dadurch einer Verringerung der maximalen Breite Bmax aus der Aufnahme 6 heraus, bis die "Scheitel-"Punkte 9m der beiden Verformungsabschnitte 9 erreicht sind. Da die Federkralle 5 unlösbar an der Rippe R angebracht ist, verbleibt sie dort.

Die Einsatzkraft Fe und die Abzugskraft Fa können gezielt eingestellt werden, und zwar insbesondere so, dass die Abzugskraft Fa merklich größer ist als die Einsatzkraft Fe. Die Einstellung der Kräfte kann beispielsweise durch eine Wahl von Winkeln der Schrägen 10a und 10b gegen eine Höhenausdehnung des Befestigungsbereichs 7 oder gegen eine Aufsteckrichtung (hier entsprechend der x-Richtung) beeinflusst werden.

Ein weiteres mögliches Maß zum Einstellen der Einsatzkraft Fe und der Abzugskraft Fa sind ein Wert der maximalen Breite Bmax, ein Wert der Öffnungsbreite W und/oder ein Verhältnis davon.

Auch können die Kräfte beispielsweise gezielt durch eine Blechstärke, eine Wahl des Materials usw. der Federkralle 5 beeinflusst werden.

Dass die Abzugskraft Fa merklich größer sein kann als die Einsatzkraft Fe wird auch dadurch unterstützt, dass bei Einsatz der Federkralle 5 die Rippe R noch nicht vorhanden ist und daher auch der Befestigungsbereich 7 elastisch verformt werden kann. Bei Abziehen des Verbindungsteils 2 wird die eingesteckte Rippe R hingegen als ein Anschlag gegen eine Verformung des Befestigungsbereichs 7, so dass sich die Federkralle 5 steifer verhält.

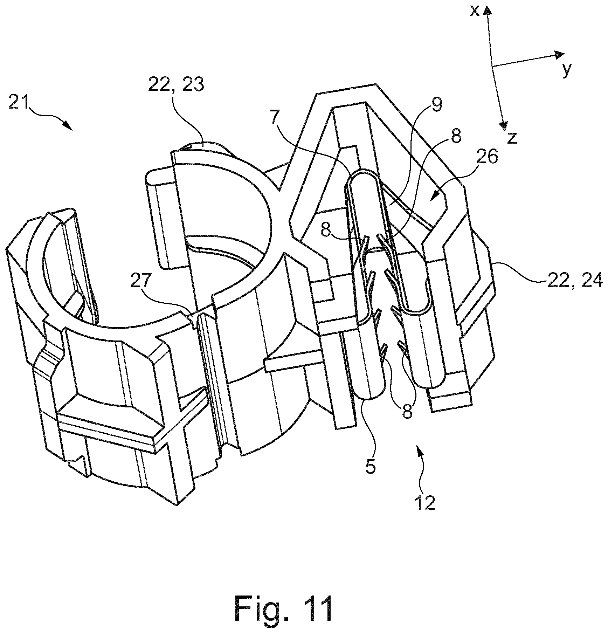

Fig.11 zeigt in Schrägansicht eine Klemme 21 gemäß einem zweiten Ausführungsbeispiel. Bei dieser Klemme 21 ist ein Befestigungsbereich 23 des Verbindungsteils 22 als eine Rohrhalterung zum Halten beispielsweise von Wellrohren (o. Abb.) ausgebildet. Der Befestigungsbereich 23 kann dazu teilweise verschwenkbar ausgestaltet sein, z.B. durch Vorsehen eines Folienscharniers 27. In einem Aufnahmeraum 26 des Aufnahmebereichs 24 des Verbindungsteils 22 ist hier beispielhaft die Federkralle 5 eingesetzt.

Selbstverständlich ist die vorliegende Erfindung nicht auf das gezeigte Ausführungsbeispiel beschränkt.

So kann zur Befestigung des Verbindungsteils an dem Trägerkörper auch die Federklammer auf den Vorsprung aufgesetzt werden und dann erst das Verbindungsteil auf die Federklammer gesteckt werden.

Allgemein kann die Klemme mit Verbindungsteil und Federklammer

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Klemme
- 2: Verbindungsteil
- 3: Befestigungsbereich
- 4: Aufnahmebereich
- 5: Federkralle
- 6: Aufnahmeraum
- 7: Befestigungsabschnitt
- 8: Kralle
- 9: Verformungsabschnitt
- 9m: Scheitelpunkt
- 10a: Schräge
- 10b: Schräge
- 11: Freies Ende
- 21: Klemme
- 22: Verbindungsteil
- 23: Befestigungsbereich
- 24: Aufnahmebereich
- 26: Aufnahmeraum
- 27: Folienscharnier
- B: Basis
- Bmax: Maximale Breite
- b: Breite
- C: Aufsteckrichtung
- Fa: Abzugskraft
- Fe: Einsatzkraft
- h: Höhe
- R: Rippe
- T: Trägerkörper
- t: Tiefe
- W: Öffnungsbreite des Aufnahmeraums
- x: x-Achse
- y: y-Achse
- z: z-Achse

## Patentansprüche

1. Klemme (1; 21), aufweisend
- ein Verbindungsteil (2; 22) mit einem Befestigungsbereich (3; 23) zum Befestigen mindestens eines Bauteils und mit einem Aufnahmebereich (4, 6; 24, 26) zur Aufnahme einer Federklammer (5) und
- eine in den Aufnahmebereich (4, 6; 24, 26) haltend einsetzbare Federklammer (5), die unlösbar auf einen Vorsprung (R) aufsteckbar ist, **dadurch gekennzeichnet, dass**
- die Federklammer (5) lösbar in den Aufnahmebereich (4, 6; 24, 26) einsetzbar ist.

2. Klemme (1; 21) nach Anspruch 1, wobei die Klemme (1; 21) eine Kantenklemme ist und der Vorsprung (R) eine Rippe ist.

3. Klemme (1; 21) nach einem der vorhergehenden Ansprüche, bei der eine Einsatzkraft (Fe) zum Einsetzen der Federklammer (5) in den Aufnahmebereich (4, 6; 24, 26) geringer ist als eine Abzugskraft (Fa) zum Lösen der Federklammer (5) aus dem Aufnahmebereich (4, 6; 24, 26) in einem verbauten Zustand.

4. Klemme (1; 21) nach einem der vorhergehenden Ansprüche, bei der die Federklammer (5) einen bandförmigen Körper aufweist, der
- einen schlitzförmigen Befestigungsabschnitt (7) zum Einstecken des Vorsprungs (R) und
- beidseitig an den Befestigungsabschnitt (7) anschließende Verformungsabschnitte (9), die seitlich von dem schlitzförmigen Befestigungsabschnitt (7) nach außen ausgebuchtet sind,
aufweist, wobei
- die Verformungsabschnitte (9) zwei gegenläufige Schrägen (10a, 10b) aufweisen, vorzugsweise mit in Richtung einer Einsteckrichtung (C) der Federklammer (5) steiler abfallenden Schrägen (10b), als die Schrägen (10a) entgegen der Einsteckrichtung (C), und
- eine maximale Breite (Bmax) der Federklammer (5) größer ist als ein Öffnungsmaß (W) des Aufnahmebereichs (6).

5. Klemme (1; 21) nach dem vorhergehenden Anspruch, bei der die maximale Breite (Bmax) der Federklammer (5) einem Abstand von maximal von dem schlitzförmigen Befestigungsabschnitt (7) entfernten Punkten (9m) der beiden Verformungsabschnitte (9) entspricht.

6. Klemme (1; 21) nach einem der vorhergehenden Ansprüche, bei der die Federklammer (5) eine Federkralle ist, vorzugsweise mit mehreren beidseitig eines schlitzförmigen Befestigungsabschnitts (7) angeordneten Krallen (8), die entgegen einer Aufsteckrichtung (C) von der Federklammer (5) abstehen.

7. Klemme (1; 21) nach einem der vorhergehenden Ansprüche, bei der die Federklammer (5) ein Blechteil ist, wobei vorzugsweise ein schlitzförmiger Befestigungsabschnitt (7) der Federklammer (5) bis nahe an ein freies Ende (11) der Federklammer (5) heranreicht.

8. Klemme (1) nach einem der vorhergehenden Ansprüche, bei welcher der Befestigungsbereich (3) als eine Kabelbaumhalterung ausgebildet ist.

9. Klemme (1; 21) nach einem der vorhergehenden Ansprüche, bei welcher der Befestigungsbereich (3; 23) als eine Schlauchhalterung ausgebildet ist.

10. Klemme (21) nach einem der vorhergehenden Ansprüche, bei welcher der Befestigungsbereich (23) als eine Rohrhalterung ausgebildet ist.

11. Verfahren (S1-S3) zum Montieren und Demontieren einer Klemme (1; 21) nach einem der vorhergehenden Ansprüche an einem mit einem Vorsprung (R) ausgestatteten Trägerkörper (T), bei dem
- eine Federklammer (5) unter Aufbringung einer Einsatzkraft (Fe) zum elastischen Verformen der Federklammer (5) formschlüssig in den Aufnahmebereich (4, 6; 24, 26) des Verbindungsteils (2; 22) der Klemme (1; 21) eingesteckt wird (S1),
- die Klemme (1; 21) mit der in dem Aufnahmebereich (4, 6; 24, 26) eingesteckten Federklammer (5) auf den Vorsprung (R) aufgesteckt wird (S2) und
- zum Abziehen des Verbindungsteils (2; 22) mit einer solchen Abzugskraft (Fa) an ihm gezogen wird, dass das Verbindungsteil (2; 22) unter elastischer Verformung der Federklammer (5) von der an dem Vorsprung (R) verbleibenden Federklammer (5) abgezogen wird (S3).

## Claims

1. Clamp (1; 21) having
- a connecting part (2; 22) with a fastening region (3; 23) for fastening at least one component and with a receiving region (4, 6; 24, 26) for receiving a spring clip (5), and
- a spring clip (5) that is insertable into the receiving region (4, 6; 24, 26) in a retentive manner and is able to be plugged onto a protrusion (R) in a non-detachable manner, **characterized in that**
- the spring clip (5) is insertable into the receiving region (4, 6; 24, 26) in a detachable manner.

2. Clamp (1; 21) according to Claim 1, wherein the clamp (1; 21) is an edge clamp and the protrusion (R) is a rib.

3. Clamp (1; 21) according to either of the preceding claims, in which an insertion force (Fe) for inserting the spring clip (5) into the receiving region (4, 6; 24, 26) is less than a pull-off force (Fa) for detaching the spring clip (5) from the receiving region (4, 6; 24, 26) in an installed state.

4. Clamp (1; 21) according to one of the preceding claims, in which the spring clip (5) has a band-like body which has
- a slot-like fastening portion (7) for plugging in the protrusion (R) and
- deformation portions (9) that adjoin the fastening portion (7) on both sides and bulge out laterally from the slot-like fastening portion (7),
wherein
- the deformation portions (9) have two opposite inclinations (10a, 10b), preferably with inclinations (10b) that drop more steeply in the direction of a plug-in direction (C) of the spring clip (5) than the inclinations (10a) counter to the plug-in direction (C), and
- a maximum width (Bmax) of the spring clip (5) is greater than an opening dimension (W) of the receiving region (6).

5. Clamp (1; 21) according to the preceding claim, in which the maximum width (Bmax) of the spring clip (5) corresponds to a spacing of points (9m) of the two deformation portions (9) that are furthest away from the slot-like fastening portion (7).

6. Clamp (1; 21) according to one of the preceding claims, in which the spring clip (5) is a spring claw, preferably with several claws (8) arranged on both sides of a slot-like fastening portion (7), said claws protruding from the spring clip (5) counter to a plug-on direction (C).

7. Clamp (1; 21) according to one of the preceding claims, in which the spring clip (5) is a sheet-metal part, wherein a slot-like fastening portion (7) of the spring clip (5) preferably reaches as far as close to a free end (11) of the spring clip (5).

8. Clamp (1) according to one of the preceding claims, in which the fastening region (3) is configured as a wire harness holder.

9. Clamp (1; 21) according to one of the preceding claims, in which the fastening region (3; 23) is configured as a hose holder.

10. Clamp (21) according to one of the preceding claims, in which the fastening region (23) is configured as a pipe holder.

11. Method (S1-S3) for mounting a clamp (1; 21) according to one of the preceding claims on a carrier body (T) equipped with a protrusion (R), or for removing it therefrom, in which
- a spring clip (5) is plugged into the receiving region (4, 6; 24, 26) of the connecting part (2; 22) of the clamp (1; 21) in a form-fitting manner with an insertion force (Fe) for elastically deforming the spring clip (5) being applied (S1),
- the clamp (1; 21) is plugged onto the protrusion (R) with the spring clip (5) plugged into the receiving region (4, 6; 24, 26) (S2), and
- in order to pull off the connecting part (2; 22), the latter is pulled with such a pull-off force (Fa) that the connecting part (2; 22) is pulled off the spring clip (5), which has remained on the protrusion (R), with the spring clip (5) being elastically deformed (S3).

## Revendications

1. Pince (1 ; 21), présentant :
- une pièce de connexion (2 ; 22) ayant une région de fixation (3 ; 23) pour la fixation d'au moins un composant et une région de réception (4, 6 ; 24, 26) pour la réception d'une attache à ressort (5) et
- une attache à ressort (5) pouvant être insérée par rétention dans la région de réception (4, 6 ; 24, 26), qui peut être enfichée de manière inamovible sur une saillie (R),
**caractérisée en ce que**
- l'attache à ressort (5) peut être insérée de manière amovible dans la région de réception (4, 6 ; 24, 26).

2. Pince (1 ; 21) selon la revendication 1, la pince (1 ; 21) étant une pince de bord et la saillie (R) est une ailette.

3. Pince (1 ; 21) selon l'une quelconque des revendications précédentes, dans laquelle une force d'insertion (Fe) pour l'insertion de l'attache à ressort (5) dans la région de réception (4, 6 ; 24, 26) est inférieure à une force de traction (Fa) pour détacher l'attache à ressort (5) de la région de réception (4, 6 ; 24, 26) dans un état monté.

4. Pince (1 ; 21) selon l'une quelconque des revendications précédentes, dans laquelle l'attache à ressort (5) présente un corps en forme de bande, qui présente
- une portion de fixation en forme de fente (7) pour l'enfichage de la saillie (R) et
- des portions de déformation (9) se raccordant des deux côtés à la portion de fixation (7), qui sont bombées vers l'extérieur latéralement depuis la portion de fixation en forme de fente (7),
- les portions de déformation (9) présentant deux biseaux de sens opposés (10a, 10b), les biseaux (10b) descendant de préférence dans le sens d'une direction d'enfichage (C) de l'attache à ressort (5) de manière plus raide que les biseaux (10a) dans le sens opposé à la direction d'enfichage (C), et
- une largeur maximale (Bmax) de l'attache à ressort (5) étant supérieure à une dimension d'ouverture (W) de la région de réception (6).

5. Pince (1 ; 21) selon la revendication précédente, dans laquelle la largeur maximale (Bmax) de l'attache à ressort (5) correspond à une distance de points (9m) des deux portions de déformation (9) éloignés au maximum de la portion de fixation en forme de fente (7).

6. Pince (1 ; 21) selon l'une quelconque des revendications précédentes, dans laquelle l'attache à ressort (5) est une griffe à ressort, de préférence avec plusieurs griffes (8) disposées des deux côtés d'une portion de fixation en forme de fente (7), qui font saillie dans le sens opposé à une direction d'enfichage (C) depuis l'attache à ressort (5).

7. Pince (1 ; 21) selon l'une quelconque des revendications précédentes, dans laquelle l'attache à ressort (5) est une pièce en tôle, une portion de fixation en forme de fente (7) de l'attache à ressort (5) avançant de préférence jusqu'à proximité d'une extrémité libre (11) de l'attache à ressort (5).

8. Pince (1) selon l'une quelconque des revendications précédentes, dans laquelle la région de fixation (3) est réalisée sous forme de fixation de faisceaux de câbles.

9. Pince (1 ; 21) selon l'une quelconque des revendications précédentes, dans laquelle la région de fixation (3 ; 23) est réalisée sous forme de fixation de tuyau.

10. Pince (21) selon l'une quelconque des revendications précédentes, dans laquelle la région de fixation (23) est réalisée sous la forme de fixation de tube.

11. Procédé (S1-S3) pour monter et démonter une pince (1 ; 21) selon l'une quelconque des revendications précédentes sur un corps porteur (T) muni d'une saillie (R), dans lequel
- une attache à ressort (5) est enfichée (S1) par engagement par correspondance de formes dans la région de réception (4, 6 ; 24, 26) de la pièce de connexion (2 ; 22) de la pince (1 ; 21) en appliquant une force d'insertion (Fe) pour la déformation élastique de l'attache à ressort (5),
- la pince (1 ; 21) est enfichée (S2) avec l'attache à ressort (5) enfichée dans la région de réception (4, 6 ; 24, 26) sur la saillie (R) et
- pour retirer la pièce de connexion (2 ; 22), est tirée avec telle une force de traction (Fa) sur celle-ci, que la pièce de connexion (2 ; 22) soit retirée (S3) par déformation élastique de l'attache à ressort (5) de l'attache à ressort (5) restant sur la saillie (R).
